Europäisches Patentamt

European Patent Office

Office européen des brevets

(11) Publication number: **0 238 246**
**A2**

(12) # EUROPEAN PATENT APPLICATION

(21) Application number: **87302034.1**

(22) Date of filing: **10.03.87**

(51) Int. Cl.4: **H 02 G 15/117**
**H 02 G 15/10, H 02 G 15/00**

(30) Priority: **17.03.86 US 840139**

(43) Date of publication of application:
**23.09.87 Bulletin 87/39**

(84) Designated Contracting States:
**BE DE FR GB IT NL SE**

(71) Applicant: **AMERICAN TELEPHONE AND TELEGRAPH COMPANY**
**550 Madison Avenue**
**New York, NY 10022 (US)**

(72) Inventor: **Lathrop, Thomas Virgil**
**1497 Withmere Lane**
**Dunwoody Georgia 30338 (US)**

**Pesto, William Steve**
**170 Pruitt Drive**
**Alpharetta Georgia 30201 (US)**

(74) Representative: **Johnston, Kenneth Graham et al**
**Western Electric Company Limited 5 Mornington Road**
**Woodford Green Essex, IG8 OTU (GB)**

(54) **Method and apparatus for enclosing a quantity of matter.**

(57) The long term water instrusion resistance of cable splice systems that use a gelable encapsualtn that is pressurized prior to gelation can be improved by providing pressurization means that maintain the pressure on the cured encapsulant above a given pressure $p_2 > p_0$, where $p_0$ is the ambient pressure. Absent such pressurization means, the pressure on the encapsulant typically decreases with time due to creep or relaxation of nominally rigid components, e.g., a plymeric closure around the encapsulated splice, or vaires due to differential thermal contraction. The pressurization means comprises one or more energy storage elements, e.g., an elastic member such as a spring, or a volume of compressed gas. In a preferred embodiment, an elastomeric "bag" (23) is formed around the completed cable splice, the two havles (24, 24') of a plastic closure placed around the bag, the two halves fastened together with spring clamps (30), liquid encapsulant introduced into the bag, and the encapsulant pressurized to a pressure $p_1 > p_2$. The spring clamps typically are dimensioned such that a gap exists between the two halves of the plastic closure for any pressure $\geq p_2$, at any temperature within a specified temperature range, at least up to the design life of the splice system. The existence of the gap assures that the spring clamps maintain pressure on the encapsulant within the closure.

FIG. 3

EP 0 238 246 A2

## Description

### METHOD AND APPARATUS FOR ENCLOSING A QUANTITY OF MATTER

#### 1.Field of the Invention

This invention pertains to means for protecting a quantity of matter, e.g., a cable splice, by encapsulation with a curable encapsulant.

#### Background of the Invention

The need to protect matter from harmful environmental influences arises in many areas of technology. One general solution to the problem comprises surrounding the substrate with an appropriate encapsulant.

For instance, when the matter to be protected comprises a joint or splice between electrical cables, such as multiconductor communications cables of the type used in telephone systems, a prior art technique comprises providing an enclosure around the splice work, securing the enclosure to each cable entering the enclosure, and filling the enclosure with an insulating liquid curable encapsulant.

For example, U.S. Patent 4,466,843 discloses a plastic liner that is placed around the splice work and secured to the cables, thereby forming an enclosure into which liquid encapsulant is poured under gravity. The encapsulant in the enclosure is then pressurized to some degree by wrapping ties, tape or the like, around the enclosure. In such a system, any encapsulant volume change subsequent to the wrapping can be expected to lead to a change in pressure. For instance, flow of encapsulant into voids within the splice work, or into the cables, decreases the effective volume of encapsulant within the enclosure, and results in a loss of pressure. Furthermore, in such a system, the splice work typically is compacted by the pressurizing means.

A new approach is disclosed by U.S. Patent application Serial No. 619,266 ('266), filed June 11, 1984 by F. J. Mullin et al (Mullin), co-assigned with this, and incorporated herein by reference. Mullin teaches forming an enclosure around the quantity of matter that is to be protected, filling the enclosure with a gelable (curable) liquid (the encapsulant), pressurizing the liquid, and providing means for maintaining pressure on the liquid at least until the liquid has solidified. In a preferred embodiment, an inner enclosure is formed around the splice by means of an elastomeric sheet, a rigid shell placed around the inner enclousre, and liquid encapsulant pumped into the inner enclosure until a predetermined pressure above ambient pressure is reached, with the elastomeric inner bag restrained by the rigid shell. Pressurization of the liquid encapsulant results, inter alia, in thorough penetration of the encapsulant into the splice work and in more complete expulsion of air from the enclosure. Enclosures of the Mullin type (referred to as the 2200 Series Closure System) are commercially available from AT&T Technologies, Inc.

A Mullin-type splice enclosure typcially is better able to protect the splice from water damage than are other prior art enclosures. In particular, Mullin-type enclosures can withstand a substantially greater water head than can other prior art enclousres. However, we have found that the ability of Mullin-type splice enclosures to prevent water ingress at least in some instances decreases with time. In view of the importance of reliably excluding water from sensitive objects e.g., cable splices and optical fiber connectors, for long periods of time an encapsulation system whose ability to withstand water ingress does not substantially decrease with time, and which is able to retain this ability under varying ambient conditions, would be of considerable interest. This application discloses such an encapsulation system.

#### Glossary of Terms

A "cable" herein is an article comprising a multiplicity of elongated bodies, typically metallic bodies (conductors) but including also dielectric bodies of the type used as optical fibers, and further comprising a dielectric sheath surrounding the elongated bodies. It is to be understood that cables typically also comprise other constituents, such as coatings or insulation around the individual fibers or conductors, strength members, metallic shielding, and filling material. Examples of cables according to the definition are multiconductor communications cables, e.g., telephone cables, and so-called distribution wire and service wire used in telephone systems. Further examples are coaxial cables of the type used in CATV systems, power cables, including cable containing power distribution wire or service wire, and optical fiber transmission or distribution cable. Cable containing service wire typically is used to connect a customer to a distribution system, and cabler containing distribution wire is typically used to branch a higher-capacity cable. Cable according to the definition can be adapted to be below ground by direct burial or in buried conduit, or to be maintained above ground.

By "solidifying", or "gelling", or "curing" of the encapsulant is meant herein any process that results in a substantial increase of the room temperature viscosity of the encapsulant, typically, to about $10^5$ cps (from an initial viscosity of the order of $10^2$ cps). Typical stiffening processes are gellation and cross linkage.

The "ambient" pressure is about 1 bar.

#### Summary of the Invention

We have discovered that the ability of pressurized encapsulation systems to prevent water ingress can be maintained for substantial periods of time if means for maintaining pressure on the encapsulant are provided. Such pressure-maintaining means typically comprise one or more energy strorage means which provide the energy needed to maintain the pressure on the encapsulant above some predetermined value $p_2 < p_1$, where $p$ is the initial pressure on the encapsulant. Exemplarily, $p_2$ is between 5 and 15 $1b/in^2$.

The energy storage means can take any appropriate form, provided that the storage means can compensate for the effects that, absent pressure-maintaining means, cause changes in the pressure on the encapsulant. Among these effects are relaxation of a "rigid" closure, or shrinkage of the encapsulant away from the rigid closure due to differential thermal contraction.

Exemplary energy storage means are spring clamps that urge the two halves of an outer shell against the encapsulant enclosed therein, or one or more reservoirs of pressurized gas, with the pressurized gas acting on the outer surface, or possibly, on internal surfaces, of the solified encapsulant. Other possible embodiments of the energy-storing means comprise an extendable enclosure containing mechanical energy restoring means (e.g., a spring) that act against the extendable enclosure, such that a pressure drop in the medium surrounding the extendable enclosure results in an extension of the enclosure, thereby at least partially storing the pressure in the surrounding medium.

In a preferred embodiment, presure-maintaining C-clamps according to the invention are used in conjunction with a Mullin-type pressurized cable splice protection system, in particular, with an enclosure substantially like those of the previously referred to 2200 Series Closure System.

Although the invention is advantageously used for enclosing a cable splice or joint, it has other applications as well. For instance, it can be used to enclose a damaged cable region, to enclose a cable end or termination, or to form a pressure block. The invention can be used with a variety of cable types, including air core and filled cable.

Brief Description of the Drawing

FIG. 1 shows a plot of pressure on the splice encapsulant vs. the water head that causes splice failure in a standardized test;

FIGS. 2 and 3 are schematic cross sectional views of an exemplary prior art Mullin-type splice system, and of a system according to the invention, respectively; and

FIGS. 4, 5, 6, and 7 schematically depict further exemplary embodiments of the invention.

Detailed Description

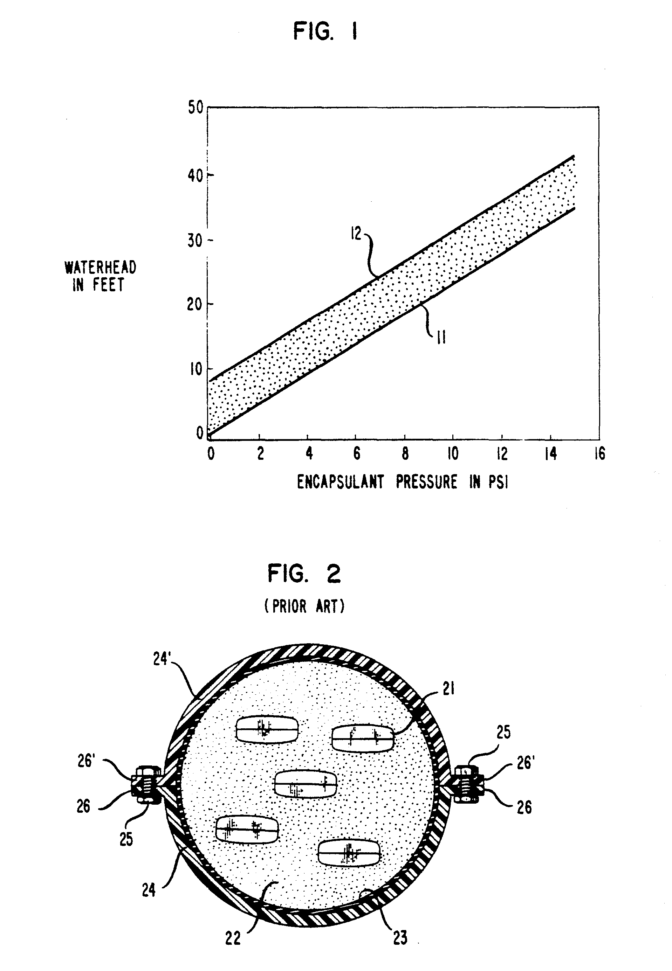

As discussed above, it has been found that in at least some cases the ability of prior art forced encapsulation enclosure systems to prevent water ingress diminishes with time. We have found a correlation between the pressure on the cured encapsulant and the water heat that can be tolerated by an encapsulated test splice in a standardized water penetration test. This correlation is exemplified by FIG. 1, in which the region between lines 11 and 12 contains the values observed in a particular test series. Based, inter alia, on the observed correlation, we have concluded that the long term ability of forced encapsulation systems to exclude water can be significantly improved if energy-storage means are provided, with the energy-storage means adapted for maintaining the pressure on the encapsulant above a predetermined value $p_2$, with $p_0 < p_2 < p_1$, for an extended period of time (e.g., the design life of a cable system, exemplarily 30 years) for all temperatures within the design temperature range.

The invention will now be further described in terms of currently preferred embodiments. All the exemplary embodiments are forced encapsulation systems such as were disclosed in the '266 patent application. When installed, such systems comprise an inner (elastic) enclosure around the cable ends and the splice work, and an outer (nominally rigid) enclosure surrounding the inner one. Liquid encapsulant e.g., an encapsulant available from AT&T Technologies, Inc. under the trade designation D-1000, is introduced into the inner enclosure, presssurized, and permitted to cure under pressure. Due to the pressurization of the encapsulant, the flexible inner enclosure is extended to the extent permitted by the presence of the rigid outer enclosure.

A schematic cross-sectional view of a prior art forced encapsulation splice enclosure system is shown in FIG. 2, wherein a multiplicity of connectors 21 are embedded in cured encapsulant 22, which is contained within elastomeric bladdder 23, which in turn is contained within a rigid enclosure consisting of segments 24 and 24'. It will be appreciated that the connectors 21 are intended to symbolize all of the splice work, and that features such as splice organizer, bond bar, pour and/or pump spout, optional pressure indicator, and the like are not shown. The two segments of the outer enclosure are fixedly and contactingly held together by nuts and bolts 25. The prior art also knows other means for keeping the two segments of the enclosure pressed together, e.g., C-clamps placed over lips 26 and 26'.

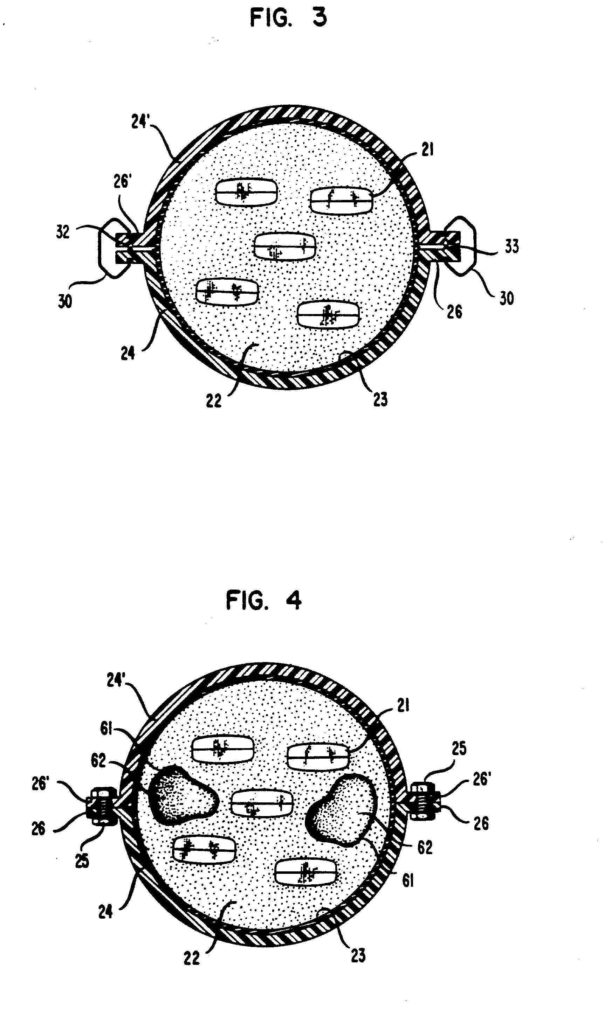

A splice enclosure system according to the invention is schematically depicted in FIG. 3. The two segments 24 and 24' are maintained such that a gap exists between lips 26 and 26', and means 30 permit changes in the gap size while maintaining pressure on encapsulant 22. Means 30 typically are appropriately shaped and dimensioned spring clamps, exemplarily fabricated from non-corroding material such as type 304 stainless steel. The size of the gap between the lips 26 and 26' can be expected to vary with temperature, due to differences in thermal expansion between the shell material and the encapsulant. The gap size can also be expected to decrease monotonically with time, due to relaxation of the shell material. The initial gap size thus has to be chosen such that these changes can be accommodated. The dimensions of the spring clamp as well as its spring constant must be selected such that the chosen initial pressure, allowable pressure drop, short term dimensional changes in the closure system due to differential thermal contraction, and long term dimensional changes due to relaxation and creep can be accomodated, as will be appreciated by those skilled in the art. The selection can be made using well-known engineering techniques.

For instance, in an exemplary inventive splice system of the Mullin type that resembles the previously referred to 2200 Series closure (urethane-based encapsulant, 4 inch internal diameter polypropylene shell, initial pressure $p_1 = 15$ psi) two spring clamps, formed from 0.125 inch thick 304 steel and extending the full length of the shell, having a "C" cross section, with 0.340 inch radius of the top and bottom curved sections of the C, and 1.136 inch length of the straight center part of the C, result in an initial gap of 0.076 inch, and maintain a pressure on the encapsulant of at least 5 psi over the design life of 30 years, if the maximum temperature drop does not exceed 40°F.

A further exemplary embodiment of the invention is schematically depicted in FIG. 4. The embodiment resembles the prior art closure system of FIG. 2, except that the inventive system contains one or more gas-filled "balloons" 62 which serve as energy storing compliant members. The balloons are filled, prior to pressurization of the liquid encapsulant, with any appropriate gas, e.g., air or $N_2$, and the gas therein will be compressed during pressurization of the encapsulant. Since the gelled encapsulant transmits, over distances, and in times, relevant herein, pressure substantially like a liquid, the entire mass of encapsulant is under essentially the same pressure. It will be appreciated that membrane 61 of the balloons should be substantially impermeable to the gas contained therein. An exemplary membrane material is metallized plastic film, e.g., aluminized MYLAR plastic film.

For instance, in an exemplary inventive splice system that also resembles the previously referred to 2200 Series closure (urethane-based encapsulant, 4 inch internal diameter polypropylene shell of 21 inches length, $p_1 = 15$ psi), a uniformly distributed air bubble located between the encapsulant and the shell maintains a pressure on the encapsulant of at least 5 psi over 30 years (maximum termpature drop 40°F) if the bubble envelope has zero permeation rate, the bubble volume at ambient pressure is 26.4 $inches^3$, and the bubble has an area of about 264 $inches^2$ and a thickness of 0.100 inches. If the premeation rate is not zero, the bubble volume is not to be increased accordingly as will be apparent to those skilled in the art.

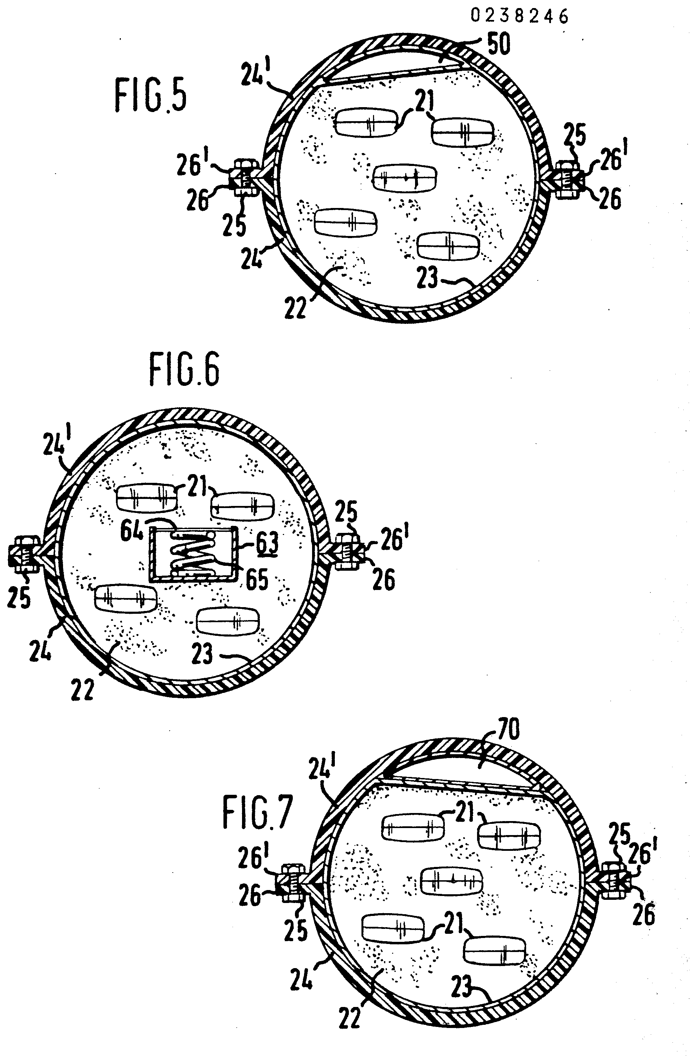

Energy storage using pressurized gas can also be practiced in other ways. For instance, a splice can be encapsulated, the encapsulated splice enclosed in a gas tight rigid enclosure, gas instroduced into the enclosure until the desired pressure is reached, and the enclosure sealed. In a variation of this concept, the pressurizing gas is generated by chemical means within the gas tight enclosure. In a further variation, the gas is contained in a separate extensible enclosure that is located between the encapsulant and the rigid enclosure. For instance, an expandable enclosure can be placed between the nonrigid first member of the containment means. (e.g., the encapsulant receiving elastomeric bag) and the rigid enclosure, or the encapsulant-receiving elastomeric bag can be completely or partially double walled, with the volume of the thus formed compartment filled with gas. Such a splice enclosure is schematically depicted in FIG. 5, wherein the partially double walled elastomeric bag 23 forms gas-filled compartment 50. A further exemplary embodiment of this type is depicted schematically in FIG. 7, wherein gas filled expandable enclosure 70 is located between the rigid enclosure 24' and nonrigid enclosure 23.

Furthermore, mechanical energy storage means can be used instead of pressurized gas. For instance, a spring contained within an enclosure embedded in the encapsulant and acting against an extensible portion of the enclosure can be used instead of the above described embedded gas-containing "balloon". Such a splice enclosure is schematically depicted in FIG. 6, wherein enclosure 63 is embedded within encapsulant 22, with 63 comprising extensible portion 64, and spring 65 acting against 64.

The above examples are intended to be illustrative of the invention and by no means exhaust the possible embodiments of the invention.

## Claims

1. Apparatus for enclosing a quantity of matter, the matter to be enclosed comprising part of at least one cable, the apparatus comprising a first enclosure (23, 24, 24') adapted for surrounding at least the part of the cable and for being sealed to the cable and adapted for receiving therein liquid encapsulant, the encapsulant to be of a type whose viscosity increases with time until the encapsulant (22) is no longer a liquid at room temperature, the first enclosure being of a type that permits pressurization of the liquid encapsulant received therein to a first pressure $p1$ that is substantially greater than ambient pressure $p_0$, CHARACTERIZED IN THAT the apparatus for enclosing the quantity of matter further comprise energy storage means (30) adapted for maintaining pressure on the encapsulant within the first enclosure above a predetermined second pressure $p_2$ after the encapsulant is no longer a liquid at room temperature, with $p_0 < p_2 < p_1$.

2. Apparatus of claim 1, wherein the quantity of matter comprises a splice between at least two cables, and wherein the first enclosure comprises

a) a nonrigid first member adapted for being fastened to the two cables and for surrounding the splice; and

(b) a substantially rigid second member that is adapted for restaining expansion of the splice-containing first member, and wherein the second member comprises a first and a second segment, the segments adapted for being joined together so as to substantially surround the splice-containing first member such that, at least when the pressure on the encapsulant is above $p_2$, a gap exists between the first and the second segment, with the energy storage means adapted for urging the second segment towards the first segment.

3. Apparatus of claim 2, wherein the first and second segments each have a substantially arcuate cross section, the first and second segments adapted for being joined together so as to form a substantially tubular second member, and wherein the energy storage means comprise spring means.

4. Apparatus of claim 3 wherein the spring means comprise a spring clamp of substantially C-shaped cross section, and wherein each segment comprises means adapted for engaging the spring clamp.

5. Apparatus of claim 1, wherein the energy storage means comprise a second enclosure, with an energy storage medium contained within the second enclosure, with the energy storage medium exerting an outward force on at least a portion of the second enclosure such that the volume of the second enclosure is a function of the pressure on the encapsulant.

6. Apparatus of claim 5, wherein the energy storage medium is a gas or a spring.

7. Apparatus of claim 5, wherein the second enclosure comprises metallized polymer film.

8. Apparatus of claim 5, wherein the second enclosure comprises a compartment adapted for receiving and retaining therein a quantity of gas, the gas serving as the energy storage medium.

9. A method for enclosing a quantity of matter comprising at least a part of at least one cable, the method comprising

a) forming ane enclosure (33) around the quantity of matter;

(b) introducing into the enclosure a curable liquid encapsulant;

c) pressurizing the curable liquid encapsulant in the enclosure to a pressure $p_1$ that is substantially greater than an ambient pressure $p_0$;

d) permitting the pressured curable liquid encapsulant to cure, the cured liquid encapsulant (22) to be referred as "the encapsulant";

CHARACTERIZED IN THAT the method further comprises

e) providing energy storage means (30) adapted for maintaining a pressure on the encapsulant that is greater than a predetermined pressure $p_2$, with $p_0 < p_2 < p_1$.

0238246

FIG. 1

FIG. 2

(PRIOR ART)

## FIG. 3

## FIG. 4

FIG.5

FIG.6

FIG.7